# EUROPEAN PATENT APPLICATION

(11) **EP 2 228 263 A1**
(43) Date of publication of application: **15.09.2010**
(21) Application number: 10156308.8
(22) Date of filing: 12.03.2010
(51) Int. Cl.: B60R 11/02, H01R 27/00, H02J 7/00

(54) **Recharging support for electronic devices**

(30) Priority: 12.03.2009 IT PI20090028
(71) Applicant: Pro-One S.R.L., 59100 Parato (IT)
(72) Inventor: Forconi, Anna, 58100, Prato (IT)
(74) Representative: Gervasi, Gemma

(57) **Abstract**

A support (10) for recharging electronic devices (13) equipped with rechargeable batteries, comprising one or more outlets (15) where the battery-charger could be plugged in and a compartment (14) capable of holding said electronic device to be charged is described.

## Description

### FIELD OF THE INVENTION

The present invention relates to the filed of devices for recharging electronic devices such as mobile phones, digital cameras, mp3 players and others.

### PRIOR ART

As is well known electronic devices as mobile phones, digital cameras,mp3 players and others have rechargeable batteries that discharge after a period; so users have to recharge the batteries to use the electronic devices.

The charging of the device is normally by battery-charger plugged into the current outlet.

Once the user puts the plug into the current outlet the problem is that it is sometimes difficult to safely place the device in order to avoid that the device itself falls or that its wire get in user's way.

### Brief description of the drawings:

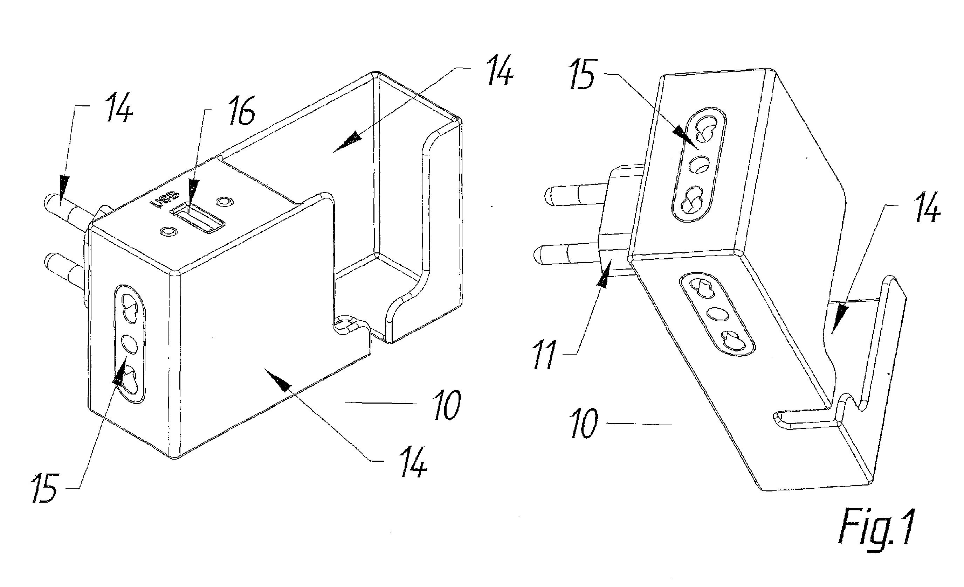

Fig.1 shows support(10) according to the invention included in a multiple adapter.
Fig.2 shows the support (10),according to the invention, with the highlighted USB plug (12) of the battery-charger plugged into USB outlet (16) of the support (10).

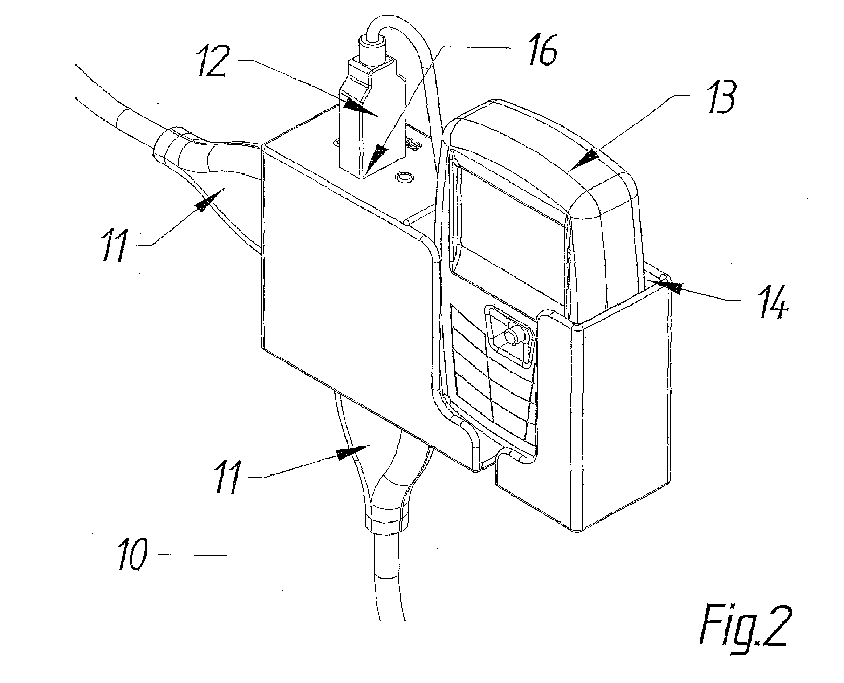

Fig.2 also shows the mobile phone (13) appropriately placed in his dedicated space(14).

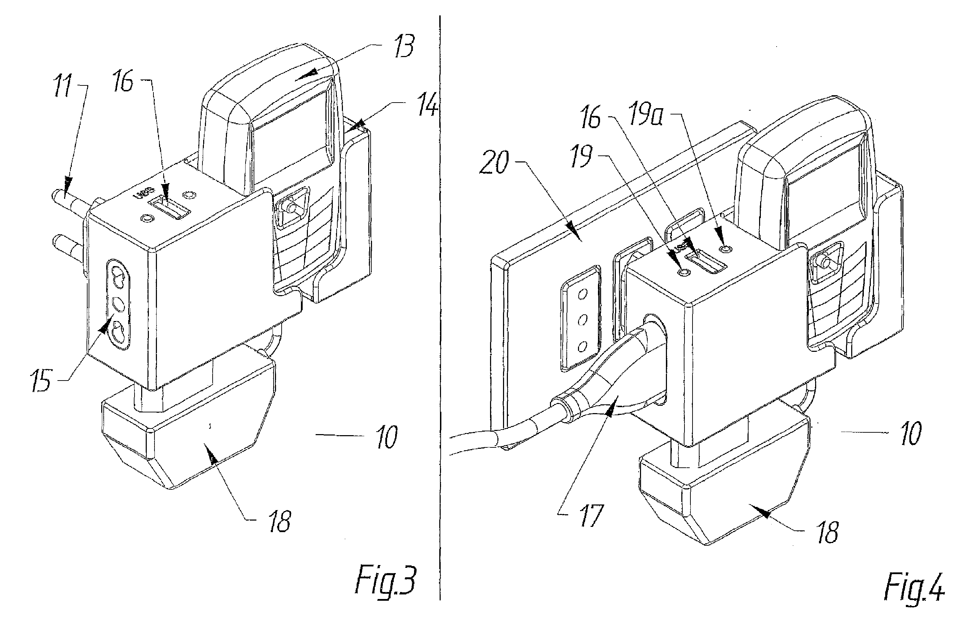

Fig.3 and Fig.4 show an application of the support(10) wherein another one plug(17),that is different from the battery-charger(18) plug, is plugged into a support outlet (15).

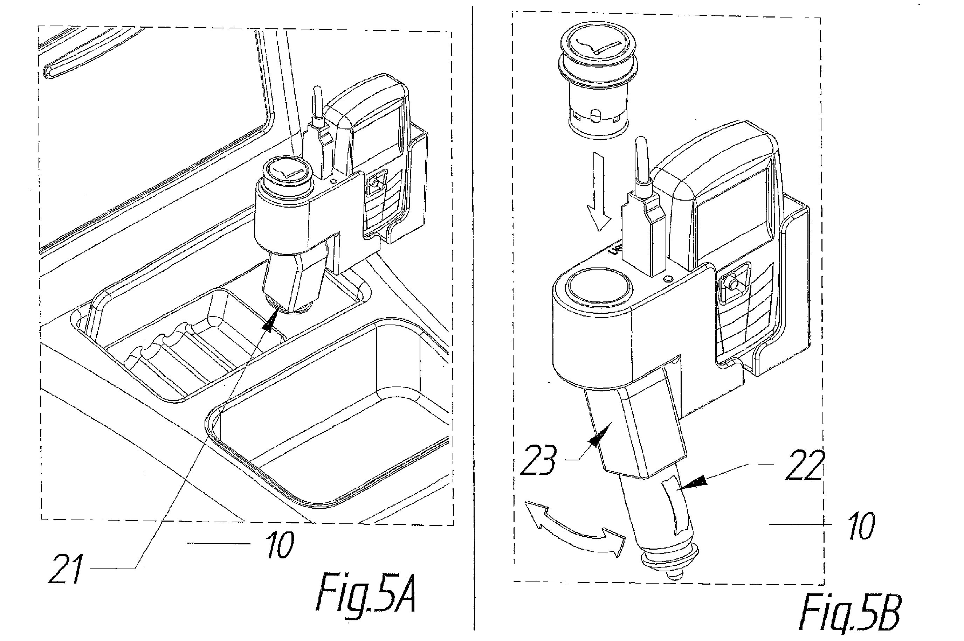

Fig 5A and 5B show the mobile phone recharging support(10) by the charging device(21) in cars.

### DESCRIPTION OF THE INVENTION

The present invention relates to devices for recharging electronic devices.

It refers in particular to solving the problem of how positioning of the device under charge (13) after the user has plugged the battery-charger(18)(12) in the current outlet (20)(21).

It's clear that the possibility of locating the device under charge (13) in a safe place is necessary because the charging operation could be done several times a day and the electronic devices (13) are of great value and have a lot of data inside.

The invention is a support (10), having one or more outles (15) and directly connectable to the current outlet (20), wherein the plug of the battery-charger (18) can be plugged into any of said outlets (15).

The support (10) can present also one or more USB outlets (16).

The coloured LEDs lights (19)(19A) show that the device charge and that the current network is powered.

Additional outlets (15) let the other users use the support (10).

The support (10) is useful for the car use, especially when users need to charge mobile phone (13) in the car; in that case the opportunity to place the device (13) in his compartment(14) preserves it from falling during the ride and increases security for the users.

In the car version the support (10) is preferably equipped with a junction (23) that makes it capable of adapting to whatever position of the current outlet(21).

## Claims

1. Support (10) for recharging electronic devices (13) equipped with rechargeable batteries, **characterised in that** said support(10) comprises one or more outlets (15) where the battery-charger could be plugged in and a compartment (14) capable of holding said electronic device (13) to be charged.

2. Support (10) according to claim 1 wherein said support (10) is endowed with one or more current outlets (15).

3. Recharging support (10) for electronic device(13) of claims 1 and 2 wherein the support(10) is endowed with a internal feeder connected with one or more USB outlets(16) that permits the device(13) charging by an USB cable.

4. Recharging support (10) for electronic devices (13) of claims 1,2 and 3 wherein the support (10) comprises also LEDs lights (19)(19A) that allow users to check the device (13) charging status and the presence of current in the system.

5. Recharging support (10) for electronic devices (13) of claims 1,2,3 and 4 wherein said support (10) allows the recharge of devices(13) inside cars through the feeding outlet (21) of cigars-lighter.
